# EUROPEAN PATENT APPLICATION

(11) **EP 4 682 745 A1**
(43) Date of publication of application: **21.01.2026**
(21) Application number: 23927367.5
(22) Date of filing: 13.03.2023
(51) Int. Cl.: G06F 21/32

(54) **INFORMATION PROCESSING DEVICE, INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: SUGEGAYA, Hiroki, Tokyo 108-8001 (JP); TSUDA, Shunsuke, Tokyo 108-8001 (JP); LI, Ning, Tokyo 108-8001 (JP)
(74) Representative: Betten & Resch
(86) International application number: PCT/JP2023/009676
(87) International publication number: WO 2024/189745

(57) **Abstract**

An information processing apparatus including: an imaging biometric information acquisition unit that acquires first biometric information of a target, the first biometric information be acquired by imaging the target; a terminal information acquisition unit that acquires biometric-related information relating to second biometric information of the target from an information processing terminal possessed by the target, the second biometric information be acquired by imaging with the information processing terminal; and a recognition unit that performs a recognition the target using the first biometric information of the target acquired by the imaging biometric information acquisition unit and the biometric-related information of the target acquired by the terminal information acquisition unit.

## Description

### Technical Field

This disclosure relates to the technical field of information processing apparatus, information processing system, information processing methods, and recording media.

### Background Art

Patent Literature 1 describes a technology that recognizes pre-registered customers, acquires customer identification information including face data and payment account numbers, tracks customers whose identification information has been acquired in real time at a shopping location, acquires the customer's location, determines whether the customer's location matches the location of a product at the shopping location, and if there is a match, associates the customer with a pick-up or return action for the product, recognizes the pick-up or return action and the product corresponding to the pick-up or return action, creates a shopping list for the customer, and performs checkout based on the shopping list.

Patent Literature describes a technology in which a first processor performs face recognition on the face information of a store visitor extracted from an image acquired by a first interface and the registered face information of each member registered in a member database, and stores in the store visitor database the registered information of the member corresponding to the registered face information that has been successfully recognized with the store visitor's face information in association with the store visitor's face information, and a second processor performs face recognition on the face information of a payment target extracted from an image acquired by a second interface and the face information of the visitor stored in the store visitor database, and performs payment processing using the registered information of the member corresponding to the face information of the store visitor that has been successfully recognized with the face information of the payment target.

Patent Literature 3 describes a technology in which, when a check-in operation is performed at a seller's store, a buyer terminal notifies the buyer of newly generated first matching information, and when the check-in operation is performed, a buying and selling support server records second matching information that can identify the first matching information in association with the buyer and provides a facial photograph of the buyer to the store terminal, and when the buyer purchases a product at the store, the store terminal allows the seller to select a face image of the buyer and obtains the first matching information from the buyer, and notifies the buying and selling support server of a payment request specifying the buyer whose face image was selected and the first matching information, and the buying and selling support server allows electronic payment for the product price if the first matching information specified in the payment request matches the second matching information associated with the buyer specified in the payment request.

### Citation List

### Patent Literature

Patent Literature 1: JP2019-530923A
Patent Literature 2: JP2018-101420A
Patent Literature 3: JP2014-099156A

### Summary

It is an example object of this disclosure to provide an information processing apparatus, an information processing system, an information processing method, and a recording medium that are intended to improve the techniques/technologies disclosed in Citation List.

### Solution to Problem

An information processing apparatus according to an example aspect includes: an imaging biometric information acquisition means for acquiring first biometric information of a target, the first biometric information be acquired by imaging the target; a terminal information acquisition means for acquiring biometric-related information relating to second biometric information of the target from an information processing terminal possessed by the target, the second biometric information be acquired by imaging with the information processing terminal; and a recognition means for performing a recognition the target using the first biometric information of the target acquired by the imaging biometric information acquisition means and the biometric-related information of the target acquired by the terminal information acquisition means.

An information processing system according to an example aspect includes: an information processing apparatus corresponding to an implementing store which implements a service using user information including biometric information of a target and payment information of the target; and a management apparatus includes: a user information storage means for storing user information including second biometric information of the target by imaging with an information processing terminal possessed ty the target and the payment information of the target, which is registered from the information processing terminal; and a store storage means for storing implementing store information related to the implementing store, wherein the management apparatus presents the implementing store to the information processing terminal, receives from the information processing terminal a selected store selected by the target from among implementing stores, and transmits the second biometric information to the information processing apparatus corresponding to the selected store.

An information processing method according to an example aspect includes acquiring first biometric information of a target, the first biometric information be acquired by imaging the target; acquiring biometric-related information relating to second biometric information of the target from an information processing terminal possessed by the target, the second biometric information be acquired by imaging with the information processing terminal; and performing a recognition the target using the first biometric information of the target and the biometric-related information of the target.

A recording medium according to an example aspect is a recording medium on which a computer program that allows a computer to execute an information processing method is recorded, the information processing method including acquiring first biometric information of a target, the first biometric information be acquired by imaging the target; acquiring biometric-related information relating to second biometric information of the target from an information processing terminal possessed by the target, the second biometric information be acquired by imaging with the information processing terminal; and performing a recognition the target using the first biometric information of the target and the biometric-related information of the target.

### Brief Description of Drawings

[FIG. 1] FIG. 1 is a block diagram illustrating a configuration of an information processing apparatus according to this disclosure.
[FIG. 2] FIG. 2 is a block diagram illustrating a configuration of an information processing system according to this disclosure.
[FIG. 3] FIG. 3 is a block diagram illustrating a configuration of a store payment support apparatus according to this disclosure.
[FIG. 4] FIG. 4 is a flowchart illustrating a flow of an information processing operation of a store payment support apparatus according to this disclosure.
[FIG. 5] FIG. 5 is a block diagram illustrating a configuration of a store payment support apparatus according to this disclosure.
[FIG. 6] FIG. 6 is a block diagram illustrating a configuration of a smartphone according to this disclosure.
[FIG. 7] FIG. 7 is a flowchart illustrating a flow of an information processing operation of a store payment support apparatus according to this disclosure.
[FIG. 8] FIG. 8 is a block diagram illustrating a configuration of an information processing system according to this disclosure.
[FIG. 9] FIG. 9 is a block diagram illustrating a configuration of a cloud server according to this disclosure.
[FIG. 10] FIG. 10 is a flowchart illustrating a flow of an information processing operation of an information processing system according to this disclosure.
[FIG. 11] FIG. 11 is a block diagram illustrating a configuration of an information processing system according to this disclosure.
[FIG. 12] FIG. 12 is a block diagram illustrating a configuration of a cloud server according to this disclosure.
[FIG. 13] FIG. 13 is a flowchart illustrating a flow of an information processing operation of an information processing system according to this disclosure.
[FIG. 14] FIG. 14 is a block diagram illustrating a configuration of an information processing system according to this disclosure.
[FIG. 15] FIG. 15 is a flowchart illustrating a flow of an information processing operation of an information processing system according to this disclosure.
[FIG. 16] FIG. 16 is a block diagram illustrating a configuration of an information processing system according to this disclosure.
[FIG. 17] FIG. 17 is a flowchart illustrating a flow of an information processing operation of an information processing system according to this disclosure.
[FIG. 18] FIG. 18 is a flowchart illustrating a flow of an information processing operation of an information processing system according to this disclosure.

### Description of Example Embodiments

The following describes embodiments of the information processing apparatus, the information processing system, the information processing method, and the recording medium with reference to the drawings.

### [1: First Example Embodiment]

A first embodiment of an information processing apparatus, information processing system, information processing method, and recording medium is described. The first embodiment of the information processing apparatus, information processing system, information processing method, and recording medium will be described below using an information processing apparatus 1 to which the first embodiment of the information processing apparatus, information processing system, information processing method, and recording medium is applied.

### [1-1: Configuration of the information processing apparatus 1]

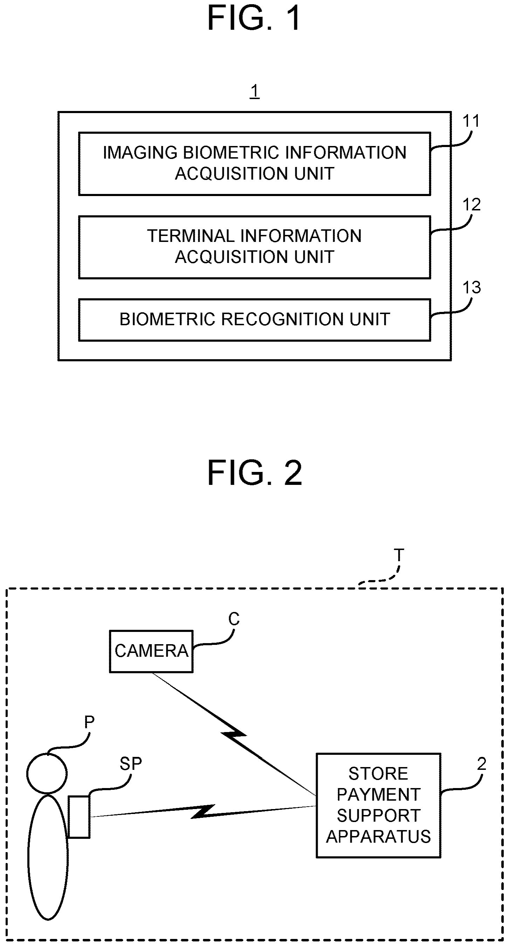

FIG. 1 is a block diagram showing the configuration of the information processing apparatus 1 according to the first embodiment. As shown in FIG. 1, the information processing apparatus 1 includes an imaging biometric information acquisition unit 11, a terminal information acquisition unit 12, and a biometric recognition unit 13. The imaging biometric information acquisition unit 11 acquires first biometric information of a target by imaging the target. The terminal information acquisition unit 12 acquires biometric-related information related to second biometric information of the target, which is acquired by imaging the target using an information processing terminal possessed by the target, from the information processing terminal. The biometric recognition unit 13 recognizes the target using the first biometric information of the target acquired by the imaging biometric information acquisition unit 11 and the biometric-related information of the target acquired by the terminal information acquisition unit 12.

### [1-2: Technical effects of the information processing apparatus 1]

The information processing apparatus 1 according to the first embodiment recognizes the target using information related to the biometric information acquired by imaging by the information processing terminal, so it is possible to guarantee that the target holding the information processing terminal is the possessor himself/herself of the information processing terminal. The information processing apparatus 1 can easily ensure security.

### [2: Second Example Embodiment]

Next, a second embodiment of the information processing apparatus, information processing system, information processing method, and recording medium will be described. The second embodiment of the information processing apparatus, information processing system, information processing method, and recording medium will be described using an information processing apparatus to which the second embodiment of the information processing apparatus, information processing system, information processing method, and recording medium is applied.

### [2-1: Example of a situation in which store payment support apparatus 2 is applied]

The information processing apparatus according to this embodiment may be applied to a store T that performs a payment service by biometric recognition. The information processing apparatus to which the second embodiment is applied is referred to as the store payment support apparatus 2. Hereinafter, the store T that performs the payment service by the biometric recognition is simply referred to as "the store T."

FIG. 2 is a schematic diagram showing an overview of a scene in which the store payment support apparatus 2 according to the second embodiment is applied. The store payment support apparatus 2 may be used in correspondence with the store T. As shown in FIG. 2, the store payment support apparatus 2 is capable of communicating with a camera C installed within the store T and a smartphone SP serving as an information processing terminal possessed by a store visitor P within the store T.

The camera C captures the store visitor P and generates the biometric information. The camera C may capture a face of the store visitor P. In this case, the camera C may generate a face image with sufficient accuracy for face recognition.

The camera C may be configured to capture images of the target located in a predetermined area within the store T. The camera C may be configured to capture images of the store visitor P who has entered the store T. Note that the camera C may be mounted on the store payment support apparatus 2.

The store payment support apparatus 2 is capable of reading either biometric information or an access code from the smartphone SP possessed by the store visitor P that has approached within a predetermined distance.

In order to use the payment service based on biometric recognition, the store visitor P registers personal information including the biometric information of the store visitor P and payment information of the store visitor P to be used for electronic payment in the store payment support apparatus 2 corresponding to the store T where the store visitor P wishes to use the payment service before using the payment service. Alternatively, the store T may utilize the payment service provided by a cloud server using biometric recognition. In this case, the cloud server registers the store visitor P as a user of the payment service using the biometric recognition at the store T. The payment information may include bank account information, credit card information, electronic money information, etc.

The store visitor P who possesses the smartphone SP captures his/her biometric information using the built-in camera of the smartphone SP and registers it in the smartphone SP. As a result, the possessor of the biometric information registered in the smartphone SP becomes the possessor of the smartphone SP. The biometric information registered in the smartphone SP may be a face image. The biometric information registered in the smartphone SP may also be an iris image, a fingerprint image, etc. The biometric information registered in the smartphone SP may also be features extracted from image such as face image, iris image, and fingerprint image. A person who successfully undergoes biometric recognition with the biometric information acquired by the smartphone SP capturing an image is guaranteed to be the genuine possessor of the smartphone SP.

The smartphone SP may be designed so that payment information is registered by an operation of the possessor of the smartphone SP. The smartphone SP may store the payment information registered and user information associated with the biometric information registered. That is, the payment information stored in the smartphone SP in association with the biometric information may be treated as authentic information. Note that the biometric information associated with the payment information stored in the smartphone SP may be biometric information captured by an apparatus other than the smartphone SP and acquired by the smartphone SP. That is, the payment information may be stored in association with the biometric information acquired by the operation of the possessor of the smartphone SP.

### [2-2: Configuration of the store payment support apparatus 2]

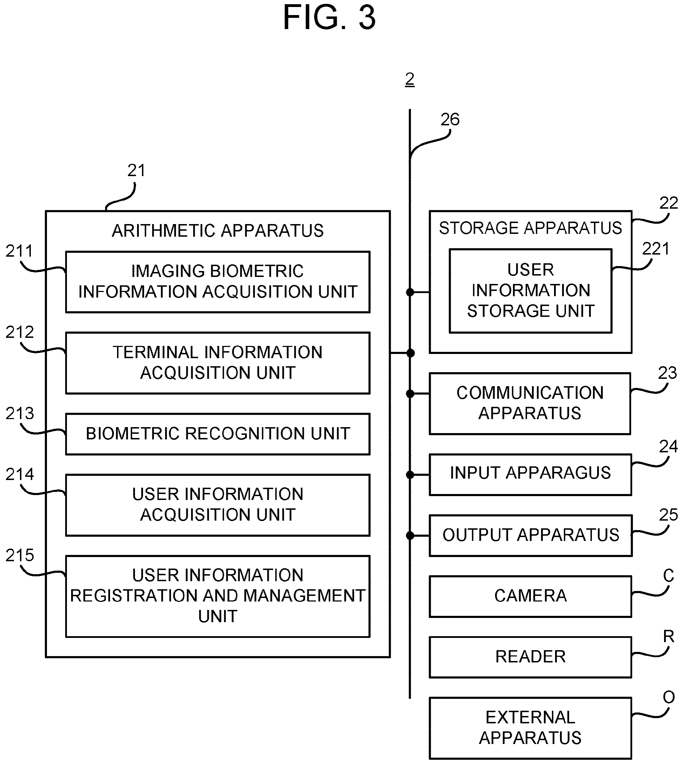

FIG. 3 is a block diagram showing the configuration of the store payment support apparatus 2 according to the second embodiment. As shown in FIG. 2, the store payment support apparatus 2 is provided with an arithmetic apparatus 21 and a storage apparatus 22. Furthermore, the store payment support apparatus 2 may include a communication apparatus 23, an input apparatus 24, and an output apparatus 25. However, the store payment support apparatus 2 may not include at least one of the communication apparatus 23, the input apparatus 24, and the output apparatus 25. The arithmetic apparatus 21, the storage apparatus 22, the communication apparatus 23, the input apparatus 24, and the output apparatus 25 may be connected via a data bus 26.

The arithmetic apparatus 21 may be, for example, a CPU (Central Processing Unit), a GPU (Graphics Processing Unit), and an FPGA (Field Programmable Gate Array), or a combination thereof. The arithmetic apparatus 21 reads a computer program. For example, the arithmetic apparatus 21 may read a computer program stored in the storage apparatus 22. For example, the arithmetic apparatus 21 may read a computer program stored in a computer-readable and non-temporary recording medium using a recording medium reading apparatus (e.g., the input apparatus 24 described later) provided in the store payment support apparatus 2. The arithmetic apparatus 21 may obtain (i.e., download or read) a computer program from an apparatus not shown, which is disposed outside the store payment support apparatus 2, via the communication apparatus 23 (or other communication apparatus). The arithmetic apparatus 21 executes the read computer program. As a result, logical functional blocks for executing the operations to be performed by the store payment support apparatus 2 are realized within the arithmetic apparatus 21. In other words, the arithmetic apparatus 21 functions as a controller for realizing logical functional blocks for executing the operations (i.e., processing) to be performed by the store payment support apparatus 2.

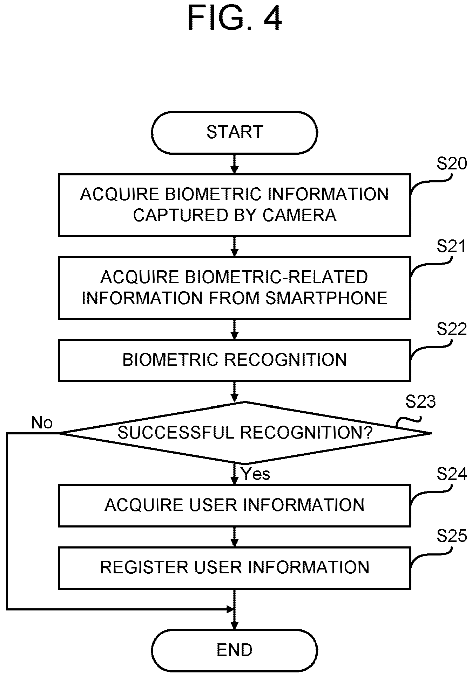

FIG. 3 shows an example of the logical functional blocks realized within the arithmetic apparatus 21 for executing information processing operations. As shown in FIG. 3, the arithmetic apparatus 21 includes an imaging biometric information acquisition unit 211, which is a specific example of the "imaging biometric information acquisition means" described in the Supplementary Note described later, a terminal information acquisition unit 212, which is a specific example of the "terminal information acquisition means" described in the Supplementary Note described later, a biometric recognition unit 213, which is a specific example of the "recognition means" described in the supplementary note described later, an user information acquisition unit 214, which is a specific example of the "user information acquisition means" described in the supplementary note described later, and an user information registration and management unit 215, which is a specific example of the "user registration means" described in the supplementary note described later, are realized. However, either the "user information acquisition unit 214" or the "user information registration and management unit 215" may be omitted from the arithmetic apparatus 21. The details of the operations of the imaging biometric information acquisition unit 211, the terminal information acquisition unit 212, the biometric recognition unit 213, the user information acquisition unit 214, and the user information registration and management unit 215 will be explained later with reference to FIG. 4.

The storage apparatus 22 is capable of storing desired data. For example, the storage apparatus 22 may temporarily store the computer program executed by the arithmetic apparatus 21. The storage apparatus 22 may temporarily store data temporarily used by the arithmetic apparatus 21 in case the arithmetic apparatus 21 is executing the computer program. The storage apparatus 22 may store data to be stored long-term by the store payment support apparatus 2. Note that the storage apparatus 22 may be a RAM (Random Access Memory), ROM (Read Only Memory), a hard disk apparatus, an optical magnetic disk apparatus, an SSD (Solid State Drive), and a disk array apparatus. In other words, the storage apparatus 22 may include a non-temporary recording medium.

The communication apparatus 23 is capable of communicating with an external apparatus of the store payment support apparatus 2 via a communication network (not shown). The communication apparatus 23 may be a communication interface based on standards such as Ethernet (registered trademark), Wi-Fi (registered trademark), Bluetooth (registered trademark), or USB (Universal Serial Bus). The store payment support apparatus 2 may communicate with the camera C and the smartphone SP via the communication apparatus 23.

The input apparatus 24 is an apparatus that accepts information input to the store payment support apparatus 2 from outside the store payment support apparatus 2. For example, the input apparatus 24 may include an operation apparatus (e.g., at least one of a keyboard, a mouse, and a touch panel) that can be operated by an operator of the store payment support apparatus 2. For example, the input apparatus 24 may include a reading apparatus capable of reading information recorded as data on a recording medium that can be attached to the store payment support apparatus 2.

The output apparatus 25 is an apparatus that outputs information to the outside of the store payment support apparatus 2. For example, the output apparatus 25 may output information as images. In other words, the output apparatus 25 may include a display apparatus (a so-called display) capable of displaying images indicating the information to be output. For example, the output apparatus 25 may output information as audio. In other words, the output apparatus 25 may include an audio apparatus (i.e., a speaker) capable of outputting audio. Furthermore, for example, the output apparatus 25 may output information onto paper. In other words, the output apparatus 25 may include a printing apparatus (i.e., a printer) capable of printing desired information onto paper.

### [2-3: Information processing operations performed by the store payment support apparatus 2]

Referring to FIG. 4, the flow of information processing operations performed by the store payment support apparatus 2 will be described. FIG. 4 is a flowchart showing the information processing operations performed by the store payment support apparatus 2.

As shown in FIG. 4, the imaging biometric information acquisition unit 211 acquires the biometric information of the store visitor P acquired by the camera C capturing an image (step S20). The imaging biometric information acquisition unit 211 may acquire a face image of the store visitor P acquired by the camera C capturing an image.

The terminal information acquisition unit 212 acquires the biometric-related information related to the biometric information of the store visitor P acquired by the smartphone SP capturing an image from the smartphone SP possessed by the store visitor P (step S21). The terminal information acquisition unit 212 may acquire the biometric-related information from the smartphone SP via the communication apparatus 23.

The biometric-related information may be the biometric information itself. The biometric information is information captured by the smartphone SP possessed by the store visitor P. The biometric-related information may be biometric information access information for accessing the biometric information stored in an external apparatus O including the smartphone SP. The biometric information access information may be information indicating access rights to the biometric information. The external apparatus O including the smartphone SP may be an apparatus that stores user information corresponding to the payment information and the biometric information. In case the biometric-related information is the biometric information access information, the terminal information acquisition unit 212 may present the biometric information access information to the external apparatus O and acquire the corresponding biometric information from the external apparatus O. Furthermore, the external apparatus O including the smartphone SP may have an access code that encodes the biometric information access information.

The store payment support apparatus 2 may be capable of communicating with a reader R that can read information from the smartphone SP via the communication apparatus 23. The reader R may be provided within the store T. In this case, the reader R may be provided at multiple locations within the store T. The terminal information acquisition unit 212 may acquire the biometric-related information read by the reader R from the smartphone SP via the communication apparatus 23. The operation of step S21 may be triggered by an information presentation operation from the smartphone SP. The store visitor P may bring the smartphone SP close to the reader R and have the reader R read the biometric-related information.

The reader R may be, for example, an RFID reader. In this case, the reader R may read the biometric information as the biometric-related information. Alternatively, the reader R may be, for example, a code reader. In this case, the reader R may read an access code as the biometric-related information.

The biometric recognition unit 213 performs biometric recognition of the store visitor P using the biometric information acquired in step S20 and the biometric information acquired in step S21 (step S22). The user information acquisition unit 214 determines whether the biometric recognition performed by the biometric recognition unit 213 was successful (step S23).

In case the biometric recognition performed by the biometric recognition unit 213 is successful (step S23: Yes), the user information acquisition unit 214 acquires user information from the external apparatus O (step S24).

The user information includes biometric information and payment information. The biometric information is information used for recognition, and the payment information is information used for payment. In case the recognition using biometric information is successful, the payment using the payment information can be performed. The user information acquisition unit 214 may acquire the user information from the smartphone SP. The user information acquisition unit 214 may acquire the user information from the smartphone SP by presenting identity verification information indicating that the biometric recognition by the biometric recognition unit 213 has been successful. The identity verification information may be information that guarantees that the user is handling their own smartphone SP.

Alternatively, the user information acquisition unit 214 may acquire the user information from the external apparatus O other than the smartphone SP. The user information acquisition unit 214 may acquire the user information from the external apparatus O by presenting the identity verification information indicating that the biometric recognition performed by the biometric recognition unit 213 was successful, and the biometric information access information.

The user information registration and management unit 215 registers the user information acquired in an user information storage unit 221 (step S25). From step S25 onwards, the user can use the payment service by the biometric recognition at the store T.

### [2-4: Technical effects of the store payment support apparatus 2]

The store payment support apparatus 2 according to the second embodiment recognizes the store visitor P using information related to the biometric information acquired by imaging by the smartphone SP, so it is possible to guarantee that the store visitor P who possesses the smartphone SP is the possessor himself/herself of the smartphone SP. The store payment support apparatus 2 can provide the payment service using the biometric recognition while ensuring security.

### [3: Third Example Embodiment]

Next, the third embodiment of the information processing apparatus, information processing system, information processing method, and recording medium will be described. In the following, the third embodiment of the information processing apparatus, information processing system, information processing method, and recording medium will be described using a store payment support apparatus 3 to which the third embodiment of the information processing apparatus, information processing system, information processing method, and recording medium is applied.

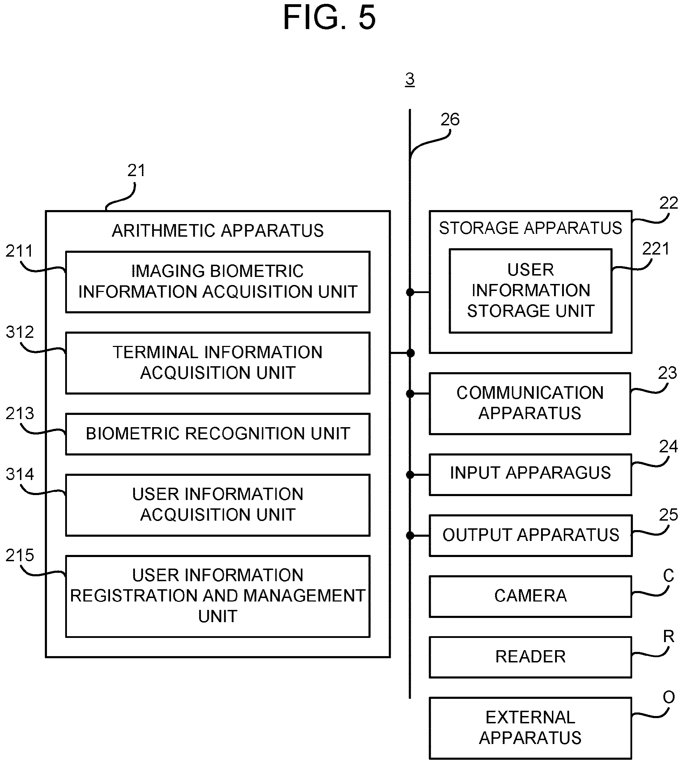

FIG. 5 is a block diagram showing the configuration of the store payment support apparatus 3 according to the third embodiment. The store payment support apparatus 3 according to the third embodiment differs from the store payment support apparatus 2 according to the second embodiment in that the operations of the terminal information acquisition unit 312 and the user information acquisition unit 314 are different.

### [3-1: Configuration of the smartphone SP]

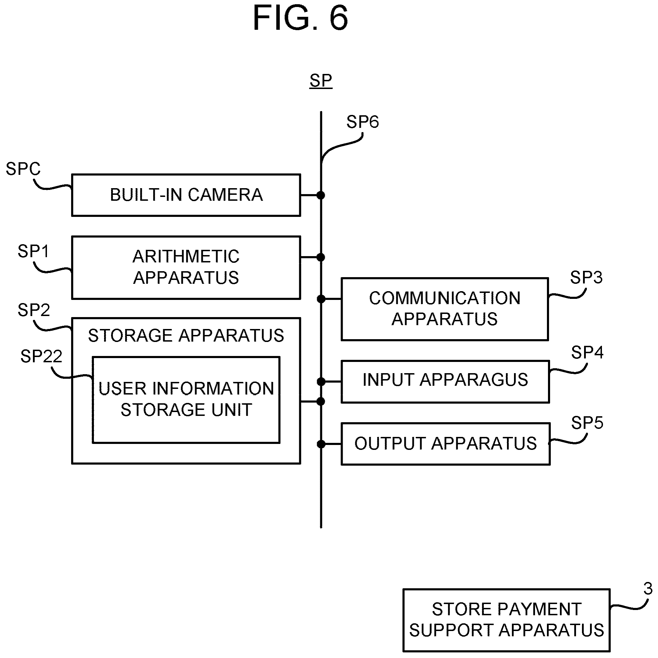

FIG. 6 is a block diagram showing the configuration of the smartphone SP according to the third embodiment. As shown in FIG. 6, the smartphone SP is equipped with a built-in camera SPC, an arithmetic apparatus SP1, a storage apparatus SP2, and a communication apparatus SP3. Furthermore, the smartphone SP may also include an input apparatus SP4 and an output apparatus SP5. The built-in camera SPC, the arithmetic apparatus SP1, the storage apparatus SP2, the communication apparatus SP3, the input apparatus SP4, and the output apparatus SP5 may be connected via a data bus SP6.

The arithmetic apparatus SP1 may be, for example, a CPU (Central Processing Unit), a GPU (Graphics Processing Unit), and/or an FPGA (Field Programmable Gate Array). The arithmetic apparatus SP1 reads a computer program. For example, the arithmetic apparatus SP1 may load a computer program stored in the storage apparatus SP2. For example, the arithmetic apparatus SP1 may load a computer program stored in a computer-readable and non-temporary recording medium using a recording medium reading apparatus (e.g., the input apparatus SP4 described later) provided in the smartphone SP. The arithmetic apparatus SP1 may obtain (i.e., download or load) a computer program from an apparatus not shown, which is located outside the smartphone SP, via the communication apparatus SP3 (or other communication apparatus). The arithmetic apparatus SP1 executes the read computer program. As a result, logical functional blocks for executing the operations that the smartphone SP should perform are realized within the arithmetic apparatus SP1. In other words, the arithmetic apparatus SP1 functions as a controller for realizing logical functional blocks for executing the operations (i.e., processing) that the smartphone SP should perform.

The storage apparatus SP2 is capable of storing desired data. For example, the storage apparatus SP2 may temporarily store the computer program executed by the arithmetic apparatus SP1. The storage apparatus SP2 may temporarily store data temporarily used by the arithmetic apparatus SP1 in case the arithmetic apparatus SP1 is executing the computer program. The storage apparatus SP2 may store data that the smartphone SP stores long-term. Note that the storage apparatus SP2 may include at least one of RAM (Random Access Memory), ROM (Read Only Memory), a hard disk device, an optical magnetic disk device, an SSD (Solid State Drive), and a disk array device. In other words, the storage apparatus SP2 may include a non-temporary recording medium. A user information storage unit SP22 is provided in the storage apparatus SP2. The user information storage unit SP22 stores the biometric information acquired by the camera C, the payment information, and the biometric-related information.

The communication apparatus SP3 is capable of communicating with an external apparatus of the smartphone SP via an unillustrated communication network. The communication apparatus SP3 may be a communication interface based on standards such as Ethernet (registered trademark), Wi-Fi (registered trademark), Bluetooth (registered trademark), or USB (Universal Serial Bus).

The input apparatus SP4 is an apparatus that accepts information input to the smartphone SP from outside the smartphone SP. For example, the input apparatus SP4 may include an operation apparatus (e.g., at least one of a keyboard, a mouse, and a touch panel) that can be operated by the store visitor P. For example, the input apparatus SP4 may include a reading apparatus capable of reading information recorded as data on a recording medium that can be attached to the smartphone SP.

The output apparatus SP5 is an apparatus that outputs information to the outside of the smartphone SP. For example, the output apparatus SP5 may output information as images. In other words, the output apparatus SP5 may include a display apparatus (so-called display) capable of displaying images indicating the information to be output. For example, the output apparatus SP5 may output information as audio. In other words, the output apparatus 25 may include an audio apparatus (so-called speaker) capable of outputting audio.

### [3-2: Information processing operations performed by the store payment support apparatus 3]

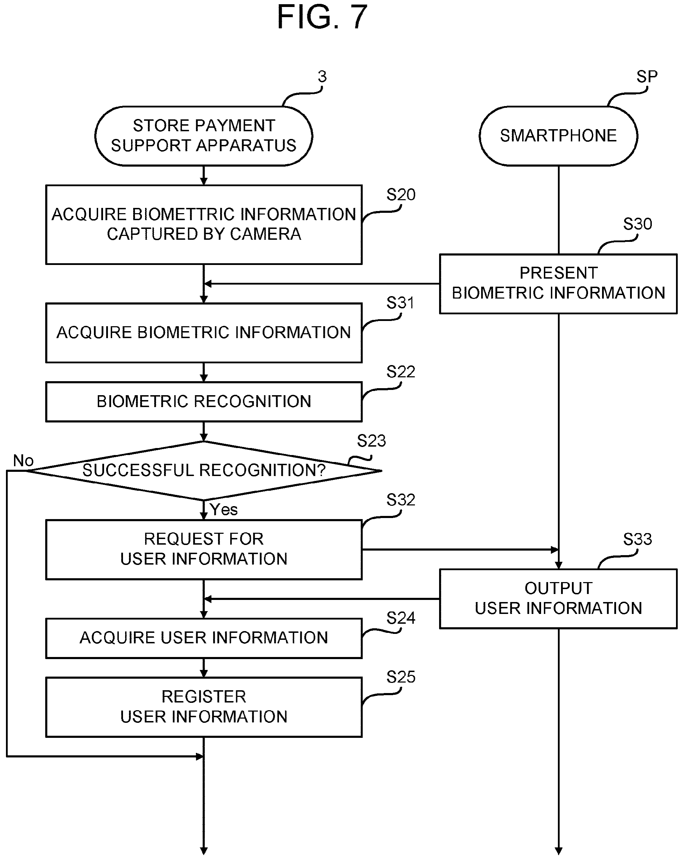

Referring to FIG. 7, the flow of information processing operations performed by the store payment support apparatus 3 will be explained. FIG. 7 is a flowchart showing the information processing operations performed by the store payment support apparatus 3.

As shown in FIG. 7, the imaging biometric information acquisition unit 211 acquires the biometric information of the store visitor P acquired by the camera C capturing an image (Step S20). In case the biometric information is presented from the smartphone SP (Step S30), the terminal information acquisition unit 312 acquires the biometric information from the smartphone SP (Step S31).

The biometric recognition unit 213 performs the biometric recognition of the store visitor P using the biometric information acquired in step S20 and the biometric information acquired in step S31 (step S22). In case the recognition in step S22 is successful (step S23: Yes), the user information acquisition unit 314 requests the user information from the smartphone SP (step S32).

Upon receiving the request for user information, the smartphone SP outputs the user information (step S33), and the user information acquisition unit 314 acquires the user information (step S34). The user information registration and management unit 215 registers the user information acquired in the user information storage unit 221 (step S25).

### [3-3: Technical effects of the store payment support apparatus 3]

The store payment support apparatus 3 according to the third embodiment performs the recognition using the biometric information of the store visitor P acquired by the smartphone SP by imaging the store visitor P, thereby ensuring that the store visitor P is the actual person. The store payment support apparatus 3 can easily provide the payment service by the biometric recognition while ensuring security.

### [4: Fourth Example Embodiment]

Next, the fourth embodiment of the information processing apparatus, information processing system, information processing method, and recording medium will be described. In the following, the fourth embodiment of the information processing apparatus, information processing system, information processing method, and recording medium will be described using an information processing system SYS4 to which the fourth embodiment of the information processing apparatus, information processing system, information processing method, and recording medium is applied. The information processing system SYS4 includes a store payment support apparatus 4 and a cloud server 100 as a management apparatus.

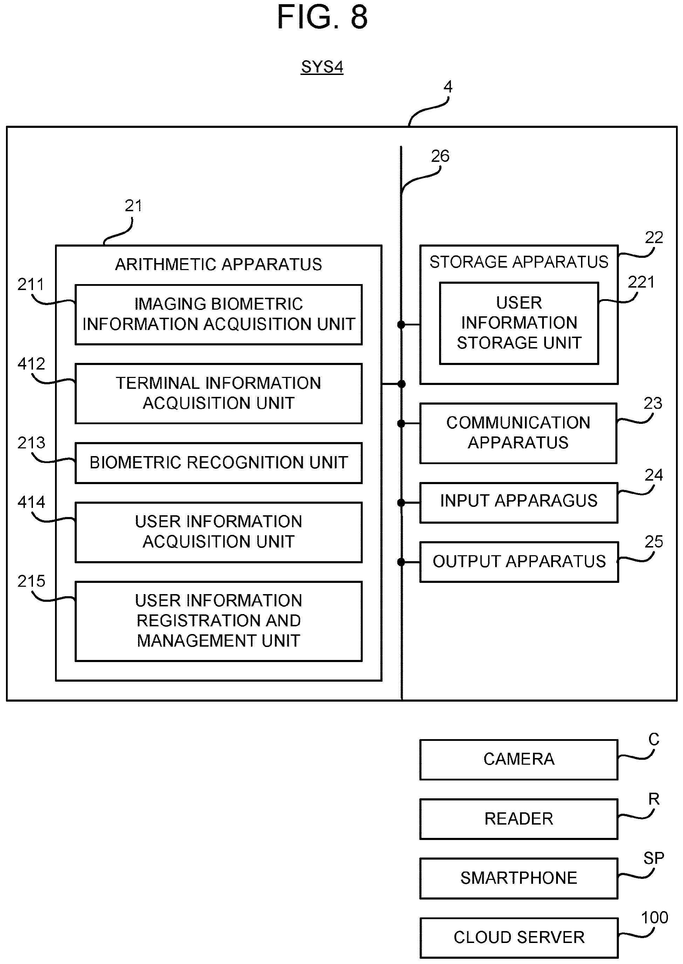

FIG. 8 is a block diagram showing the configuration of the store payment support apparatus 4 according to the fourth embodiment. The store payment support apparatus 4 according to the fourth embodiment differs from the store payment support apparatus 2 according to the second embodiment and the store payment support apparatus 3 according to the third embodiment in that the operations of a terminal information acquisition unit 412 and an user information acquisition unit 414 are different.

As shown in FIG. 8, the store payment support apparatus 4 operates in communication with the cloud server 100 in addition to the camera C and the smartphone SP. The cloud server 100 is an authorized institution that is permitted to handle the user information including the biometric information and the payment information. The cloud server 100 stores the user information including the biometric information and the payment information, and at least one of the biometric information access information and the access code as acquisition information. The cloud server 100 can provide the biometric information in case at least one of the biometric information access information and the access code is presented.

The smartphone SP and the cloud server 100 may store at least one of the biometric information access information and the access code, which may be information provided by the cloud server 100 to the smartphone SP in case the user information is registered with the cloud server 100 by the smartphone SP. In this case, the cloud server 100 transmits at least one of the biometric information access information and the access codes to the smartphone SP. Alternatively, the biometric information access information may be information generated by the smartphone SP in case of registering user information with the cloud server 100. In this case, the smartphone SP transmits at least one of the biometric information access information and the access code to the cloud server 100.

The store T is an institution that is permitted to use the user information handled by the cloud server 100 in case the possessor of the user information gives permission.

### [4-1: Configuration of the cloud server 100]

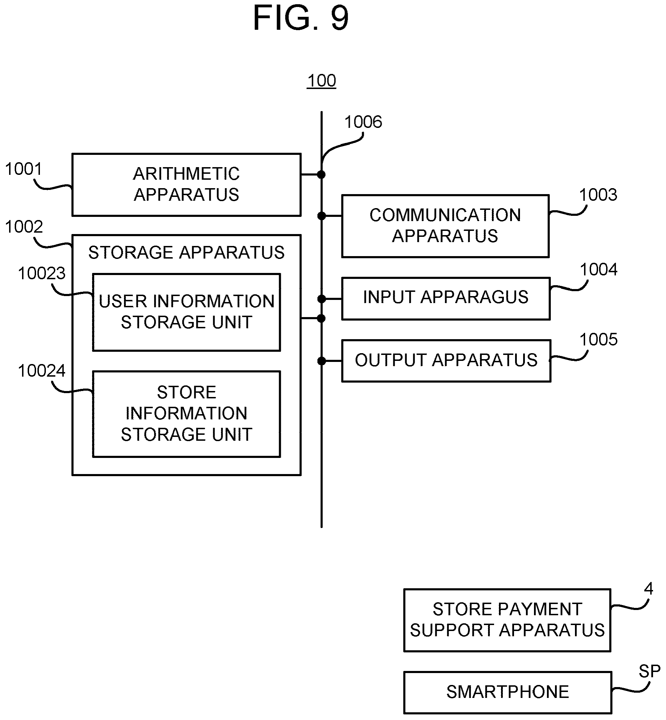

FIG. 9 is a block diagram showing the configuration of the cloud server 100. As shown in FIG. 9, the cloud server 100 is equipped with an arithmetic apparatus 1001, a storage apparatus 1002, and a communication apparatus 1003. Additionally, the cloud server 100 may include an input apparatus 1004 and an output apparatus 1005. The arithmetic apparatus 1001, the storage apparatus 1002, the communication apparatus 1003, the input apparatus 1004, and the output apparatus 1005 may be connected via a data bus 1006.

The arithmetic apparatus 1001 may be, for example, a CPU (Central Processing Unit), a GPU (Graphics Processing Unit), and/or an FPGA (Field Programmable Gate Array). The arithmetic apparatus 1001 reads a computer program. For example, the arithmetic apparatus 1001 may read a computer program stored in the storage apparatus 1002. For example, the arithmetic apparatus 1001 may read a computer program stored in a computer-readable and non-temporary storage medium using a storage medium reading apparatus (e.g., the input apparatus SP4 described later) provided by the cloud server 100. The arithmetic apparatus 1001 may obtain (i.e., download or read) a computer program from an apparatus not shown, which is located outside the cloud server 100, via the communication apparatus 1003 (or other communication apparatus). The arithmetic apparatus 1001 executes the read computer program. As a result, logical functional blocks for executing the operations that the cloud server 100 should perform are realized within the arithmetic apparatus 1001. In other words, the arithmetic apparatus 1001 functions as a controller for realizing logical functional blocks for executing the operations (i.e., processing) that the cloud server 100 should perform.

The storage apparatus 1002 is capable of storing desired data. For example, the storage apparatus 1002 may temporarily store the computer program being executed by the arithmetic apparatus 1001. The storage apparatus 1002 may temporarily store data that the arithmetic apparatus 1001 temporarily uses when executing a computer program. The storage apparatus 1002 may store data that the cloud server 100 stores long-term. Note that the storage apparatus 1002 may be RAM (Random Access Memory), ROM (Read Only Memory), a hard disk apparatus, an optical magnetic disk apparatus, an SSD (Solid State Drive), and a disk array apparatus. In other words, the storage apparatus 1002 may include non-temporary recording media. Within the storage apparatus 1002, an user information storage unit 10023 and a store information storage unit 10024 are implemented.

The user information storage unit 10023 stores the user information including the biometric information and the payment information for each user in association with at least one of the biometric information access information and the access code. The user information storage unit 10023 stores the user information including the biometric information and the payment information provided from the smartphone SP possessed by the user, and at least one of the biometric information access information and the access code.

The store information storage unit 10024 stores information indicating the store T that performs payment using the biometric recognition. The store information storage unit 10024 stores information indicating the store T capable of responding to a request for provision of at least one of the biometric information and the user information in case the request for provision of at least one of the biometric information and the user information is received.

The communication apparatus 1003 is capable of communicating with an apparatus external to the cloud server 100 via a communication network (not shown). The communication apparatus 1003 may be a communication interface based on specifications such as Ethernet (registered trademark), Wi-Fi (registered trademark), Bluetooth (registered trademark), or USB (Universal Serial Bus).

The input apparatus 1004 is an apparatus that accepts information input from outside the cloud server 100 to the cloud server 100. The output apparatus 1005 is an apparatus that outputs information to outside the cloud server 100.

### [4-2: Information processing operations performed by the information processing system SYS4]

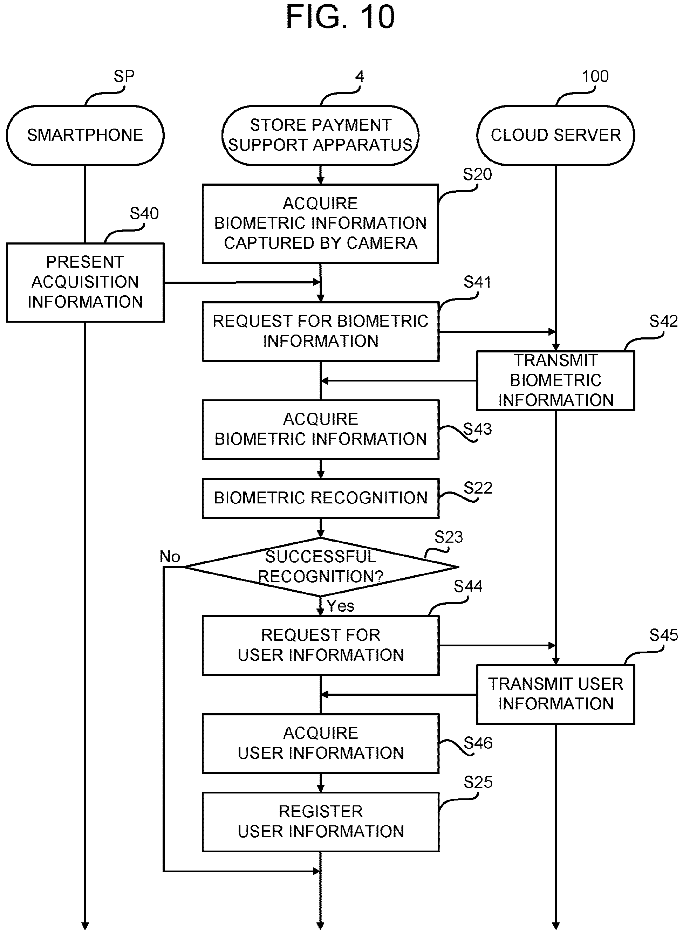

Referring to FIG. 10, the flow of information processing operations performed by the information processing system SYS4 will be explained. FIG. 10 is a flowchart showing the information processing operations performed by the information processing system SYS4.

As shown in FIG. 10, the imaging biometric information acquisition unit 211 acquires the biometric information of the store visitor P acquired by the camera C capturing an image (Step S20).

In case at least one of the biometric information access information and the access code is presented from the smartphone SP (Step S40), the terminal information acquisition unit 412 presents at least one of the biometric information access information and the access code to the cloud server 100 and requests the transmission of the biometric information (Step S41).

In case the cloud server 100 transmits the biometric information, the terminal information acquisition unit 412 acquires the biometric information (Step S43). The biometric recognition unit 213 performs the biometric recognition of the store visitor P using the biometric information acquired in step S20 and the biometric information acquired in step S43 (step S22). The user information acquisition unit 414 determines whether the biometric recognition performed by the biometric recognition unit 213 was successful (step S23).

In case the biometric recognition performed by the biometric recognition unit 213 is successful (step S23: Yes), the user information acquisition unit 414 requests the user information from the cloud server 100 by presenting at least one of the biometric information access information and the access codes, and the identity verification information (step S44). In case the cloud server 100 transmits the user information (step S45), the user information acquisition unit 414 acquires the user information (step S46). The user information registration and management unit 215 registers the user information acquired in the user information storage unit 221 (step S25).

In step S44, the user information acquisition unit 414 requests the user information by presenting at least one of the biometric information access information and the access code, and the identity verification information to the smartphone SP, and in step S46, the user information acquisition unit 414 may acquire the user information transmitted by the smartphone SP.

### [4-3: Technical effects of the information processing system SYS4]

The information processing system SYS4 according to the fourth embodiment performs recognition using the biometric information of the store visitor P acquired by imaging by the smartphone SP acquired from the cloud server 100, thereby ensuring that the store visitor P is the actual person. The store payment support apparatus 4 can provide the payment service using the biometric recognition easily while ensuring security.

### [5: Fifth Example Embodiment]

Next, the fifth embodiment of the information processing apparatus, information processing system, information processing method, and recording medium will be described. In the following, the fifth embodiment of the information processing apparatus, information processing system, information processing method, and recording medium will be described using an information processing system SYS5 to which the fifth embodiment of the information processing apparatus, information processing system, information processing method, and recording medium is applied. The information processing system SYS5 includes a store payment support apparatus 5 and a cloud server 500.

In each of the above embodiments, the store T was able to acquire user information in case it was able to acquire the biometric-related information directly from the smartphone SP within the store T. In this embodiment, the store T may acquire the user information by acquiring the biometric-related information indirectly via the cloud server 500.

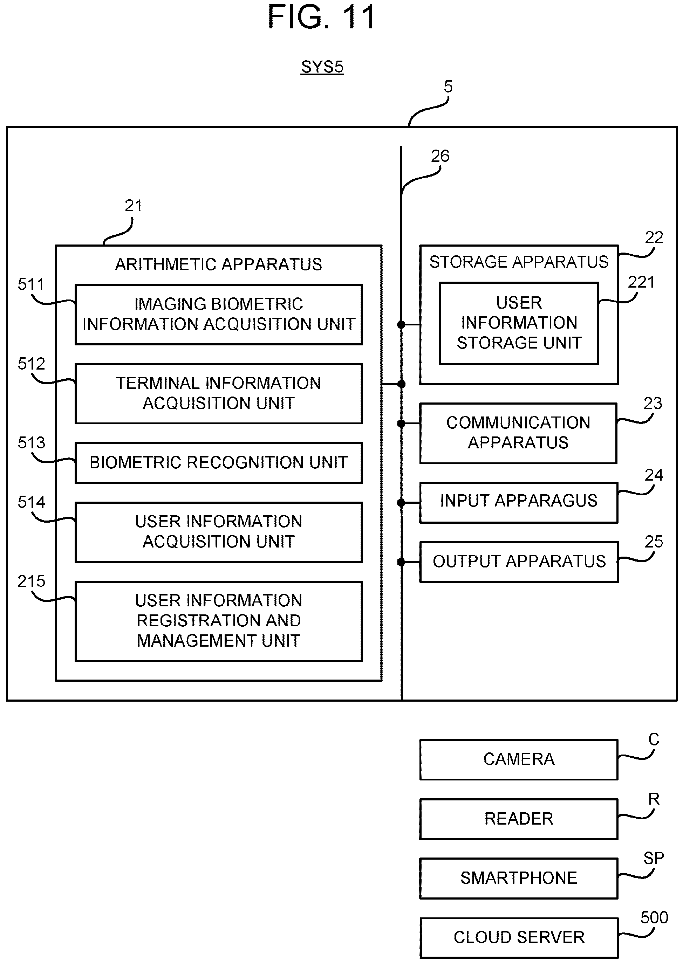

FIG. 11 is a block diagram showing the configuration of the store payment support apparatus 5 according to the fifth embodiment. The store payment support apparatus 5 according to the fifth embodiment includes an imaging biometric information acquisition unit 511, a terminal information acquisition unit 512, a biometric recognition unit 513, and an user information acquisition unit 514, wherein the operations of the imaging biometric information acquisition unit 511, the terminal information acquisition unit 512, and the biometric recognition unit 513 are different from those of the store payment support apparatus 2 according to the second embodiment, and the operations of the user information acquisition unit 514 are different from those of the user information acquisition unit 4 according to the fourth embodiment. In addition, the store payment support apparatus 5 according to the fifth embodiment operates while communicating with the cloud server 500.

### [5-1: Configuration of the cloud server 500]

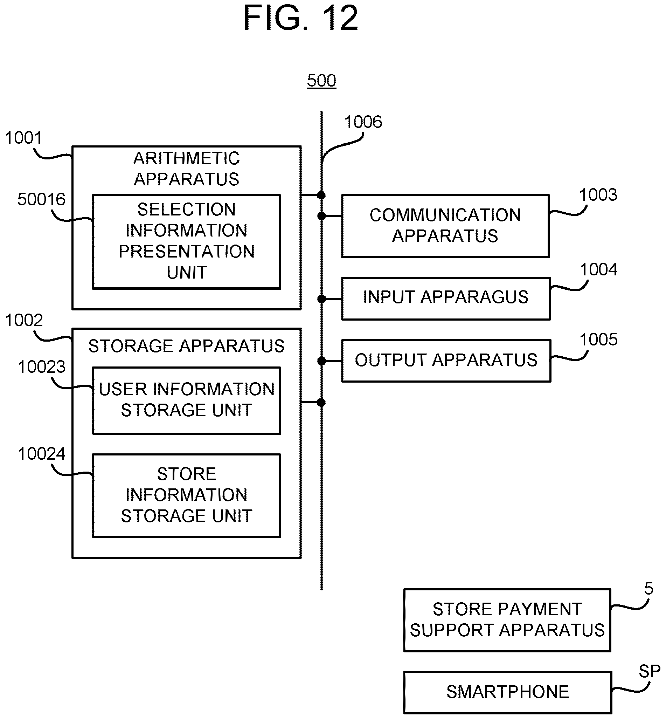

As shown in FIG. 12, the cloud server 500 according to the fifth embodiment is provided with the arithmetic apparatus 1001, the storage apparatus 1002, and the communication apparatus 1003, similar to the cloud server 100 according to the fourth embodiment. Furthermore, the cloud server 500 according to the fifth embodiment may include the input apparatus 1004 and the output apparatus 1005, as in the cloud server 100 according to the fourth embodiment. However, the cloud server 500 may not necessarily include at least one of the input apparatus 1004 and the output apparatus 1005. The cloud server 500 according to the fifth embodiment differs from the cloud server 100 according to the fourth embodiment in that a selection information presentation unit 50016 is further provided in the arithmetic apparatus 1001. Other features of the cloud server 500 may be the same as other features of the cloud server 100 according to the fourth embodiment. For this reason, the following describes in detail the parts that differ from the embodiments already described, and omits explanations of other overlapping parts as appropriate.

### [5-2: Information processing operations performed by the information processing system SYS5]

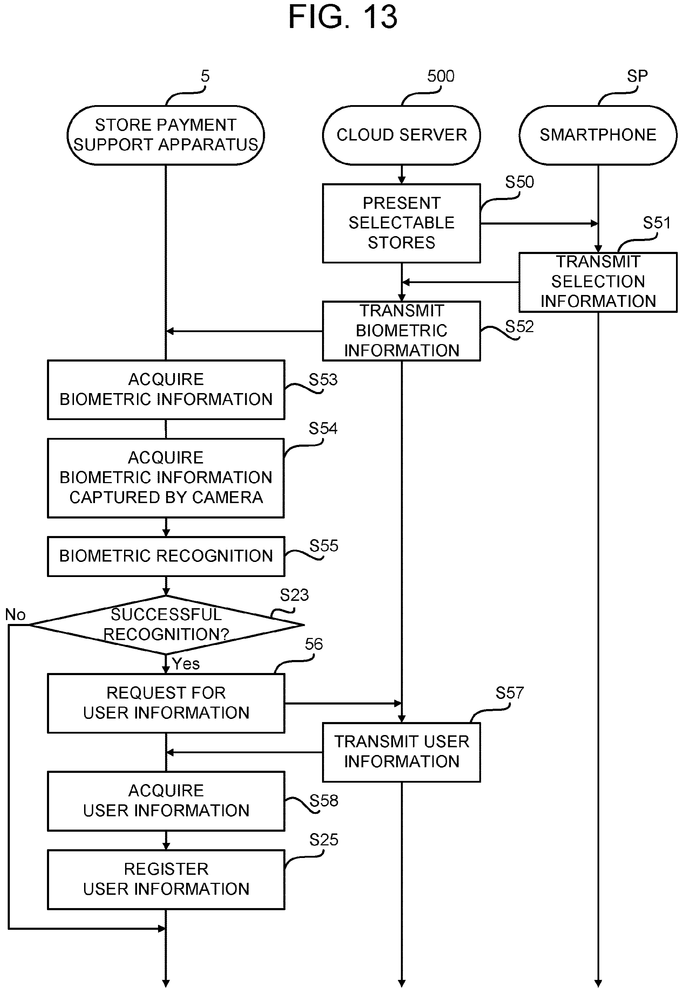

Referring to FIG. 13, the flow of information processing operations performed by the information processing system SYS5 will be described. FIG. 13 is a flowchart showing the information processing operations performed by the information processing system SYS5.

As shown in FIG. 13, the selection information presentation unit 50016 presents the smartphone SP with selectable stores T (step S50). The selection information presentation unit 50016 may display the selectable stores T on the display of the smartphone SP. The store visitor P may select the desired store T by operating the smartphone SP.

The smartphone SP transmits information indicating the store T selected to the cloud server 500 (step S51). Note that there may be a time lag between steps S50 and S51. For example, the store visitor P may operate the smartphone SP to select the store T in case of deciding to use the store T. Alternatively, the store visitor P may select the store T in case of desiring to use the payment service via the biometric recognition upon entering the store T.

The cloud server 500 transmits the biometric information of the store visitor P to the store T selected by the store visitor P in response to the information received from the smartphone SP (step S52). The terminal information acquisition unit 512 acquires the biometric information of the store visitor P acquired by the smartphone SP through the cloud server 500 (step S53).

The imaging biometric information acquisition unit 511 acquires the biometric information of the store visitor P acquired by imaging with the camera C (step S54). The biometric recognition unit 513 performs the biometric recognition of the store visitor P using the biometric information acquired in step S53 and the biometric information acquired in step S54 (step S55). Note that FIG. 13 illustrates an example where, after receiving the biometric information transmitted (step S53), the biometric information acquired by the camera C capturing image is acquired (step S54), but the order of the operations may be reversed. For example, the acquisition of the biometric information acquired by the camera C in step S54 may be performed in case the store visitor P enters the store. The acquisition of the biometric information acquired by the camera C may be performed before acquiring the biometric information via the cloud server 500 in step S53.

The user information acquisition unit 514 determines whether the biometric recognition performed by the biometric recognition unit 513 was successful (step S23). In case the biometric recognition performed by the biometric recognition unit 513 is successful (step S23: Yes), the user information acquisition unit 514 presents the identity verification information to the cloud server 500 and requests user information (step S56).

In case the cloud server 500 transmits the user information (step S57), the user information acquisition unit 514 acquires the user information (step S58). The user information registration and management unit 215 registers the user information acquired in the user information storage unit 221 (step S25).

In this embodiment, the store visitor P may select a plurality of the stores T. In this case, in step S52, the cloud server 500 may transmit the biometric information to the plurality of the stores T selected. Additionally, in case a request for user information is received from any of the store T corresponding to the plurality of the stores T selected simultaneously (step S56), in step S57, the cloud server 500 may transmit the user information to the plurality of the stores T selected. The user information may be registered in the store payment support apparatus 5 corresponding to the store T selected, and the user may be able to use the payment service via the biometric recognition at the corresponding store T.

Additionally, the store visitor P may select the store T by specifying a region. In this case, the store T located in the region specified may be processed as the store T selected by the store visitor P. The region specified by the store visitor P may be, for example, a vicinity of a residence of the store visitor P. Additionally, the region specified by the store visitor P may be a vicinity of a workplace of the store visitor P. Furthermore, the region specified by the store visitor P may be a temporary region such as a travel destination.

Additionally, the selection information presentation unit 50016 may provide the store information of the store T desired by the store visitor P, which is stored in the store information storage unit 10024, to the smartphone SP in response to the request from the smartphone SP. The store T desired by the store visitor P may be, for example, the store T existing within a predetermined range including the location of the store T. Additionally, the store T desired by the store visitor P may be, for example, the store T existing within a predetermined range including a location specified by the store T.

Furthermore, the store visitor P may select the store T that have the same attributes, such as using the same trade name, in a group. The cloud server 500 may manage the store T by attribute, and the store visitor P may select the store T by attribute.

In addition, the store visitor P may restrict the use of the user information with respect to the store T selected. The case of restricting the use of the user information will be explained in other embodiments.

In any of the above cases, the selection information presentation unit 50016 may provide the smartphone SP with an interface that allows the store visitor P to easily perform selection operations.

### [5-3: Technical effects of the information processing system SYS5]

The information processing system SYS5 according to the fifth embodiment can inform the store visitor P of the store T where the payment service can be used by the biometric recognition. As a result, the information processing system SYS5 can enable the store visitor P to easily use the payment service using the biometric recognition.

### [6: Sixth Example Embodiment]

Next, the sixth embodiment of the information processing apparatus, information processing system, information processing method, and recording medium will be described. In the following, the sixth embodiment of the information processing apparatus, information processing system, information processing method, and recording medium will be described using an information processing system SYS6 to which the sixth embodiment of the information processing apparatus, information processing system, information processing method, and recording medium is applied. The information processing system SYS6 includes a store payment support apparatus 6 and the cloud server 100.

### [6-1: Configuration of the store payment support apparatus 6]

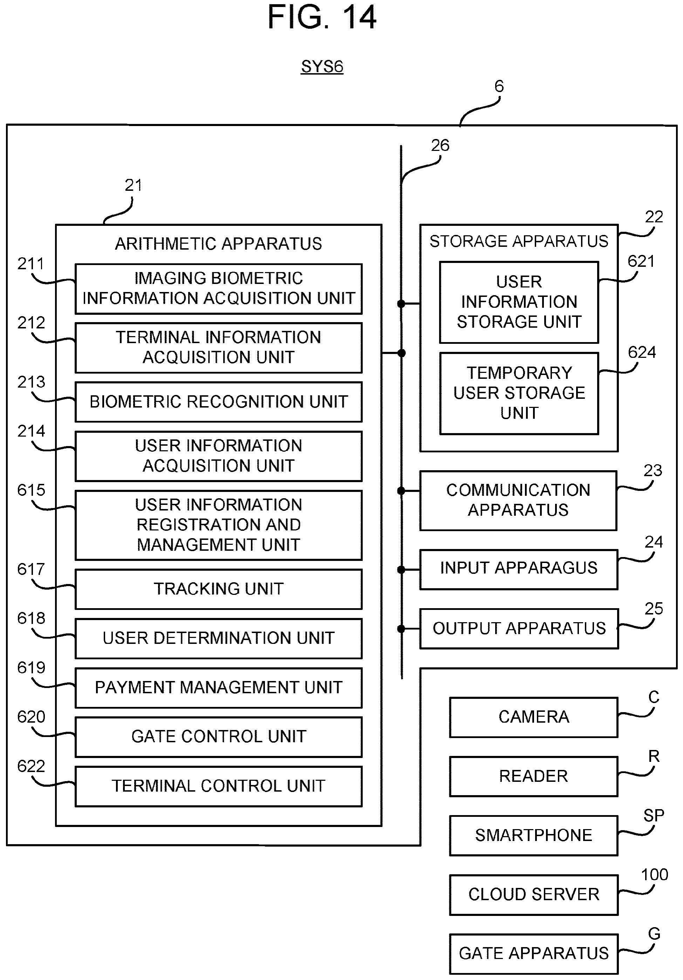

As shown in FIG. 14, the store payment support apparatus 6 according to the sixth embodiment is provided with the arithmetic apparatus 21, the storage apparatus 22, and the communication apparatus 23, as in the store payment support apparatus 2 according to the second embodiment through the store payment support apparatus 5 according to the fifth embodiment. Furthermore, the store payment support apparatus 6 according to the sixth embodiment may include the input apparatus 24 and the output apparatus 25, as in the store payment support apparatus 2 according to the second embodiment through the store payment support apparatus 5 according to the fifth embodiment. However, the store payment support apparatus 6 may not include at least one of the input apparatus 24 and the output apparatus 25. The store payment support apparatus 6 according to the sixth embodiment further comprises a tracking unit 617, an user determination unit 618, a payment management unit 619, a gate control unit 620 and a terminal control unit 622 are further realized within the arithmetic apparatus 21, and a temporary user storage unit 624 is further provided in the storage apparatus 22. The gate control unit 620 controls the opening and closing of a gate of a gate apparatus G. The gate apparatus G is provided at the entrance and exit of the store T and is controlled to open in case a target enters the store T and may also be controlled to open in case a target exits the store T.

Other features of the store payment support apparatus 6 may be the same as at least one other feature of the store payment support apparatus 2 according to the second embodiment through the store payment support apparatus 5 according to the fifth embodiment. In addition, the cloud server 100 may be the same as the cloud server 100 according to the fourth embodiment. For this reason, the following description will explain in detail the parts that differ from the embodiments already described, and omit explanations of other overlapping parts as appropriate.

### [6-2: Information processing operations performed by the information processing system SYS6]

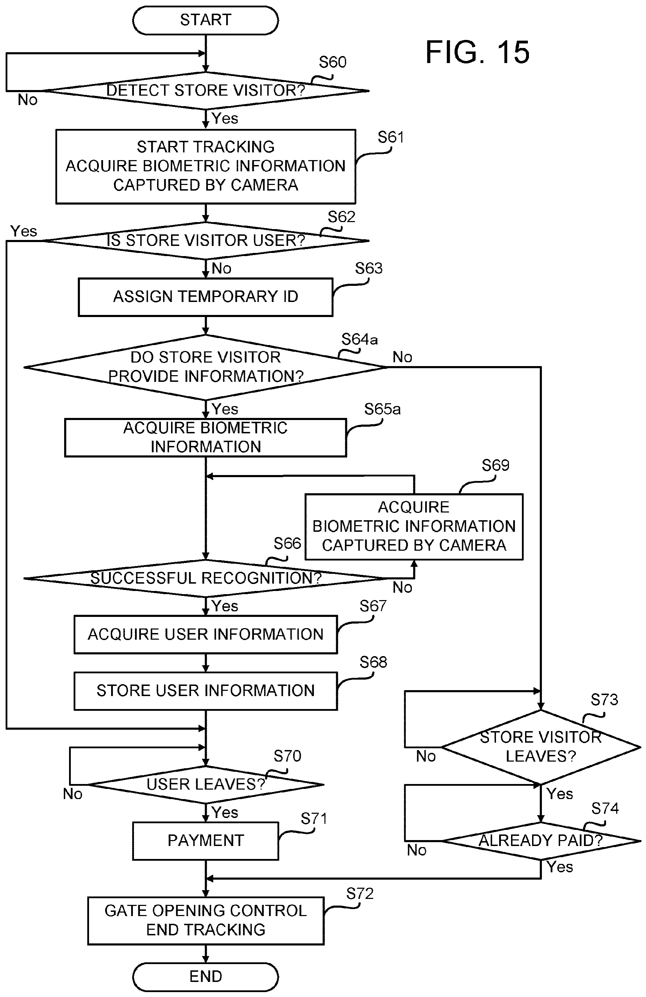

Referring to FIG. 15, the information processing operations performed by the information processing system SYS6 will be described. FIG. 15 is a flowchart showing the flow of information processing operations performed by the information processing system SYS6.

As shown in FIG. 15, in case the tracking unit 617 detects a new tracking target, i.e., the store visitor P (step S60: Yes), it starts tracking the store visitor P. The tracking unit 617 may detect the target entering the store in case the gate apparatus G is opened.

The imaging biometric information acquisition unit 211 acquires the biometric information of the store visitor P acquired by the camera C (step S61). That is, the imaging biometric information acquisition unit 211 acquires the biometric information of the store visitor P who has entered the store. The tracking unit 617 may track the store visitor P using the biometric information of the store visitor P.

The user determination unit 618 determines whether the store visitor P is registered as the user using the biometric information of the store visitor P acquired by imaging with the camera C (Step S62). The user determination unit 618 may determine whether the store visitor P is registered as the user by using the biometric information registered in the user information storage unit 621 and the biometric information of the store visitor P acquired by the camera C. The user determination unit 618 may determine whether the store visitor P is registered as the user by using a biometric recognition engine used by the biometric recognition unit 213.

In case the store visitor P is registered as the user (step S62: Yes), the process proceeds to step S70. In this case, the terminal control unit 622 controls the smartphone SP possessed by the user to perform at least one of vibration and audio output.

In case the store visitor P is not registered as the user (step S62: No), the user determination unit 618 assigns a temporary ID to the store visitor P (step S63). The user determination unit 618 registers the biometric information of the store visitor P and the temporary ID assigned to the store visitor P in the temporary user storage unit 624 in association with each other.

The terminal information acquisition unit 212 determines whether the smartphone SP possessed by the store visitor P has presented the biometric-related information (step S64a). In case the smartphone SP presents the biometric-related information (Step S64a: Yes), the terminal information acquisition unit 212 acquires the biometric information from the external apparatus O (Step S65a). In case the smartphone SP presents the biometric information, the terminal information acquisition unit 212 acquires the biometric information from the smartphone SP. In case the smartphone SP presents the biometric information access information, the terminal information acquisition unit 212 presents the biometric information access information to the cloud server 100 and acquires the biometric information from the cloud server 100.

The biometric recognition unit 213 performs the biometric recognition of the store visitor P using the biometric information registered in the temporary user storage unit 624 and the biometric information acquired in step S65. In case the biometric recognition is successful (step S66: Yes), the user information acquisition unit 214 acquires the user information (step S67). In case the biometric-related information presented in step S64a is the biometric information, the user information acquisition unit 214 may acquire the user information from the smartphone SP. Alternatively, in case the biometric-related information presented in step S64a is the biometric information access information, the user information acquisition unit 214 may acquire the user information from the cloud server 100. The user information registration and management unit 215 registers the user information in the user information storage unit 621 (step S68). At this time, the terminal control unit 622 may transmit information indicating that the user has been registered as the user to the smartphone SP possessed by the user. At this time, the management of the store visitor P using the temporary ID may be switched to management of the user using the user information. Additionally, the user determination unit 618 may delete the biometric information of the registered user from the temporary user storage unit 624 and the temporary ID.

In case the biometric recognition fails (step S66: No), the imaging biometric information acquisition unit 211 may instruct the camera C to capture an image of the store visitor P, acquire new biometric information, and the biometric recognition unit 213 may perform the biometric recognition of the store visitor P using the new biometric information acquired (Step S69).

The tracking unit 617 may track which products user inside the store T is picking up and attempting to purchase. The tracking unit 617 may track user and products while associating them with each other.

The tracking unit 617 determines whether the user is about to leave the store T (step S70). The tracking unit 617 may determine that the user is about to leave the store T in case the user approaches the gate apparatus G within a predetermined distance.

In case the user is about to leave the store T (Step S70: Yes), the payment management unit 619 uses the user information to process the payment for the product the user wishes to purchase using the payment method indicated by the payment information of the user (Step S71). Once the payment is complete, the gate control unit 620 controls the opening of the gate apparatus G (Step S72). The tracking unit 617 ends tracking of the user in case the user leaves the store T.

In case the smartphone SP does not present the biometric-related information (step S64a: No), the process proceeds to step S73. In this case, the store visitor P is not the user, and the temporary ID remains associated with the store visitor P.

The tracking unit 617 determines whether the store visitor P is about to leave the store T (step S73). The tracking unit 617 may determine that the user is about to leave the store T in case the store visitor P approaches the gate apparatus G within a predetermined distance. In case the store visitor P is about to leave the store T (Step S73: Yes), the payment management unit 619 determines whether the store visitor P has completed the payment for the desired product (Step S74). In case the tracking unit 617 determines that the store visitor P has completed the payment for the desired product, it may set a flag indicating that the payment has been completed in the information of the temporary user storage unit 624 for the store visitor P, and the payment management unit 619 may determine whether the store visitor P is making the payment for the product the store visitor P wishes to purchase by referring to the temporary user storage unit 624.

The payment made by the store visitor P may be a so-called self-checkout payment. The store visitor P may perform the payment by operating a so-called self-checkout register. The self-checkout register may support various payment methods such as cash payment, credit card payment, electronic money payment, and code payment.

In case the store visitor P has completed the payment for the product the store visitor P wishes to purchase (step S74: Yes), the gate control unit 620 opens the gate apparatus G (step S72). The tracking unit 617 ends tracking of the store visitor P in case the store visitor P leaves the store T. The user determination unit 618 may delete the biometric information and the temporary ID of the store visitor P registered from the temporary user storage unit 624.

In case the store visitor P has not completed the payment for the desired product (step S74: No), for example, the output apparatus 25 may display an image or output an audio to prompt the store visitor P to make the payment.

### [6-3: Technical effects of the information processing system SYS6]

The information processing system SYS6 according to the sixth embodiment manages the products picked up by the store visitor P in association with the store visitor P, and enables the payment of the products managed in association with the store visitor P to be completed in case the store visitor P leaves the store T. The store payment support apparatus 6 can complete the payment for the items possessed by the store visitor P using the payment service based on the biometric recognition in case the store visitor P is the user of the payment service based on the biometric recognition and leaves the store T. The store payment support apparatus 6 can manage the store visitor P who is not the user of the payment service using the biometric recognition and who has been assigned the temporary ID using one-to-one verification based on the biometric information. Whether or not the store visitor P assigned the temporary ID has completed the payment can be managed by one-to-one verification, so that even the store visitor P who is not the user can make purchases at the store T.

The store payment support apparatus 6 notifies the store visitor P that he or she is the user in case the store visitor P enters the store T, so that the user can use the payment service with peace of mind. The store payment support apparatus 6 notifies the store visitor P that he or she is the user registered via at least one of vibration or audio output from the smartphone SP, so that the user can recognize that the payment service is available without needing to look at the smartphone SP. Therefore, the user can make the purchases at the store T without needing to take out the smartphone SP, wallet, etc., from his or her bag or other items.

Additionally, the store payment support apparatus 6 notifies the store visitor P in case the store visitor P is registered as the user, allowing the user registered to use the payment service with confidence.

### [7: Seventh Example Embodiment]

Next, the seventh embodiment of the information processing apparatus, information processing system, information processing method, and recording medium will be described. In the following, the seventh embodiment of the information processing apparatus, information processing system, information processing method, and recording medium will be described using an information processing system SYS7 to which the seventh embodiment of the information processing apparatus, information processing system, information processing method, and recording medium is applied. The information processing system SYS7 includes a store payment support apparatus 7 and the cloud server 500.

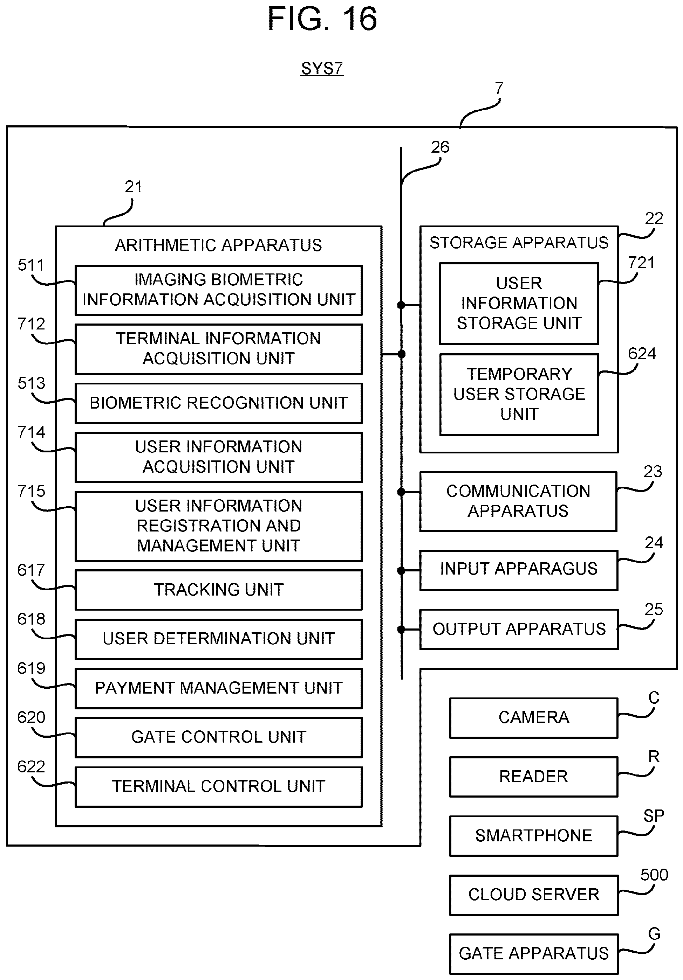

FIG. 16 is a block diagram showing the configuration of the store payment support apparatus 7 according to the seventh embodiment. The store payment support apparatus 7 according to the seventh embodiment differs from the store payment support apparatus 6 according to the sixth embodiment in that the operations of a terminal information acquisition unit 712, an user information acquisition unit 714, and an user information registration and management unit 715 are different. In addition, the cloud server 500 may be the same as the cloud server 500 according to the fifth embodiment.

### [7-1: Information processing operations performed by the information processing system SYS7]

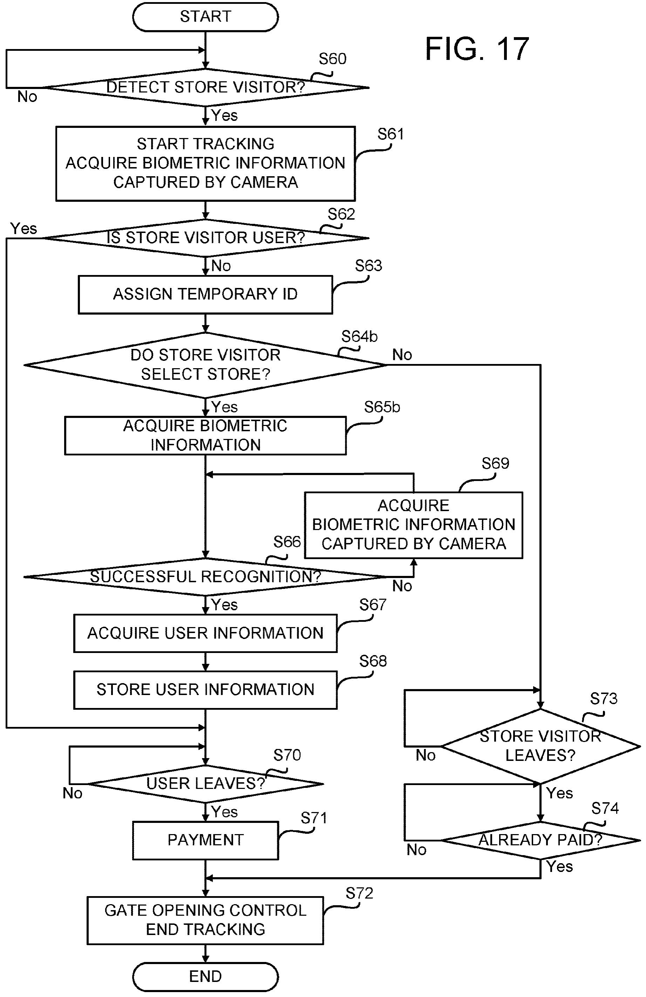

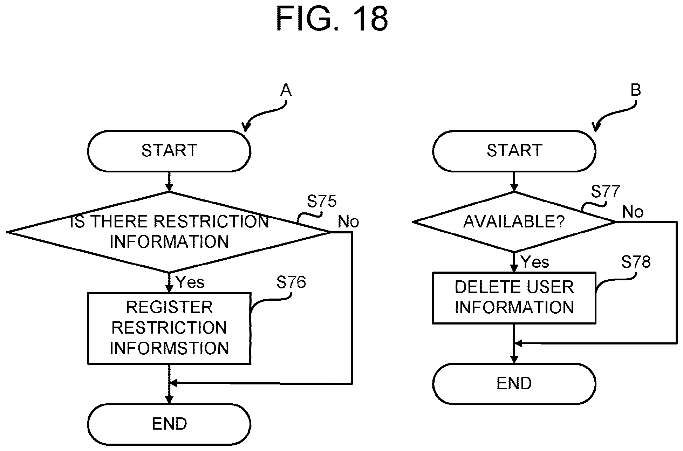

Referring to FIG. 17 and FIG. 18, the information processing operations performed by the information processing system SYS7 will be described. FIG. 17 and FIG. 18 are flowcharts showing the information processing operations performed by the information processing system SYS7.

The seventh embodiment differs from the sixth embodiment in that the store visitor P is registered as the user in response to the store visitor P selecting the store T. The operation according to the seventh embodiment differs from the operation according to the sixth embodiment in that the operation of acquiring the biometric information acquired by the smartphone SP through imaging is performed in case the store visitor P wishes to become the user.

That is, as shown in FIG. 17, after the user determination unit 618 assigns the temporary ID to the store visitor P in step S63, the store visitor P selects the store T by operating the smartphone SP, and the smartphone SP transmits information indicating the store T selected to the cloud server 500 (Step S64b). The cloud server 500 transmits the biometric information of the store visitor P to the store T selected by the store visitor P in response to the information indicating the store T received from the smartphone SP, and the terminal information acquisition unit 712 acquires the biometric information of the store visitor P acquired by the smartphone SP capturing an image (Step S65b).

### [In case of restricting the use of user information]

The store visitor P may be able to restrict the use of user information for the store T selected. For example, the use of the user information may be restricted so that the store T selected by the store visitor P as a travel destination can only be used once. For example, the period during which user information can be used may be restricted for the particular store T.

In step S64b, the smartphone SP may transmit restriction information regarding the restriction of the user information use to the cloud server 500 in correspondence with the store T. In this case, in step S67, the user information acquisition unit 714 acquires the user information associated with the restriction information.

In step S68, as shown in flowchart A in FIG. 18, the user information registration and management unit 715 determines whether or not the user information is associated with the restriction information regarding restrictions on the use of the user information (step S75). In case the restriction information is attached (step S75: Yes), the user information registration and management unit 715 registers the restriction information corresponding to the user information in the user information storage unit 721 (step S76).

In case of performing at least one of the user determination operation in step S62 shown in FIG. 17 and the payment operation in step S71, as shown in flowchart B in FIG. 18, the user information registration and management unit 715 determines whether the corresponding user information is available based on the restrictions indicated by the restriction information registered in step S76 (step S77). In case the user information cannot be used (step S77: Yes), the user information registration and management unit 715 deletes the user information of the user (step S78).

### [7-2: Technical effects of the information processing system SYS7]

The information processing system SYS7 according to the seventh embodiment can restrict the use of user information, thereby improving user convenience.

### [8: Supplementary Note]

The following supplementary note is disclosed regarding the embodiments described above.

### [Supplementary Note 1]

An information processing apparatus including:
an imaging biometric information acquisition means for acquiring first biometric information of a target, the first biometric information be acquired by imaging the target;
a terminal information acquisition means for acquiring biometric-related information relating to second biometric information of the target from an information processing terminal possessed by the target, the second biometric information be acquired by imaging with the information processing terminal; and
a recognition means for performing a recognition the target using the first biometric information of the target acquired by the imaging biometric information acquisition means and the biometric-related information of the target acquired by the terminal information acquisition means.

### [Supplementary Note 2]

The information processing apparatus according to Supplementary Note 1, further comprising:
a user information acquisition means for acquiring user information including biometric information of the target and payment information of the target from an external apparatus other than the information processing apparatus in case the recognition by the recognition means is successful; and
a user registration means for registering the target as a user of a service using the user information.

### [Supplementary Note 3]

The information processing apparatus according to Supplementary Note 1 of 2, wherein
the terminal information acquisition means acquires the second biometric information directly from the information processing terminal or via an apparatus external to the information processing terminal.

### [Supplementary Note 4]

The information processing apparatus according to Supplementary Note 1 or 2, wherein
the terminal information acquisition means acquires acquisition information for acquiring the second biometric information from an external apparatus in which the second biometric information is registered, directly from the information processing terminal or via an apparatus external to the information processing terminal, and
the external apparatus is an apparatus external to the information processing terminal.

### [Supplementary Note 5]

The information processing apparatus according to Supplementary Note 2, further comprising:
a tracking means for performing a tracking the target; and
a user determination means for determining whether or not a store visitor who is a new target for the tracking by the tracking means is registered as the user using biometric information acquired by imaging the store visitor; and wherein
in case the terminal information acquisition means acquires the biometric-related information from an information processing terminal possessed by the store visitor who is not the user, and in case the recognition by the recognition means is successful, the user registration means registers the store visitor as the user.

### [Supplementary Note 6]

The information processing apparatus according to Supplementary Note 5, further comprising
a gate control means for controlling a gate to open in case the user tracked by the tracking means leaves a store corresponding to the information processing apparatus.

### [Supplementary Note 7]

The information processing apparatus according to Supplementary Note 5, further comprising
a gate control means for controlling a gate to open in case the store visitor who is not the user tracked by the tracking means makes a payment at a store corresponding to the information processing apparatus.

### [Supplementary Note 8]

The information processing apparatus according to Supplementary Note 5, further comprising
a terminal control means for controlling an information processing terminal possessed by the user to perform at least one of vibration and audio output in case the recognition means recognizes the store visitor and the store visitor is the user.

### [Supplementary Note 9]

The information processing apparatus according to Supplementary Note 5, further comprising
a terminal control means for transmitting information indicating that the store visitor has been registered as the user to an information processing terminal possessed by the user, in case the user registration means registers the store visitor who is not the user as the user.

### [Supplementary Note 10]

An information processing system including:
an information processing apparatus corresponding to an implementing store which implements a service using user information including biometric information of a target and payment information of the target; and
a management apparatus includes:
   a user information storage means for storing user information including second biometric information of the target by imaging with an information processing terminal possessed ty the target and the payment information of the target, which is registered from the information processing terminal; and
   a store storage means for storing implementing store information related to the implementing store, wherein
   the management apparatus
      presents the implementing store to the information processing terminal,
      receives from the information processing terminal a selected store selected by the target from among implementing stores, and
      transmits the second biometric information to the information processing apparatus corresponding to the selected store.

### [Supplementary Note 11]

An information processing method including:
acquiring first biometric information of a target, the first biometric information be acquired by imaging the target;
acquiring biometric-related information relating to second biometric information of the target from an information processing terminal possessed by the target, the second biometric information be acquired by imaging with the information processing terminal; and
performing a recognition the target using the first biometric information of the target and the biometric-related information of the target.

### [Supplementary Note 12]

A recording medium on which a computer program that allows a computer to execute an information processing method is recorded,
the information processing method including:
acquiring first biometric information of a target, the first biometric information be acquired by imaging the target;
acquiring biometric-related information relating to second biometric information of the target from an information processing terminal possessed by the target, the second biometric information be acquired by imaging with the information processing terminal; and
performing a recognition the target using the first biometric information of the target and the biometric-related information of the target.

This disclosure may be changed as appropriate within the scope of the technical concept that can be read from the claims and the entire description. Information processing apparatus, information processing systems, information processing methods, and recording media involving such changes are also included in the technical concept of this disclosure.

### Description of Reference Codes

1 information processing apparatus
11, 211, 511 imaging biometric information acquisition unit
12, 212, 312, 412, 512, 712 terminal information acquisition unit
13, 213, 513 biometric recognition unit
2, 3, 4, 5, 6, 7 store payment support apparatus
T store
SP smartphone
P store visitor
C camera
O external apparatus
214, 314, 414, 514, 714 user information acquisition unit
215, 615, 715 user information registration and management unit
SYS4, SYS5, SYS6, SYS7 information processing system
100, 500 cloud server
221, 621, 721, SP22, 10023 user information storage unit
10024 store information storage unit
50016 selection information presentation unit
617 tracking unit
618 user determination unit
619 payment management unit
620 gate control unit
622 terminal control unit
624 temporary user storage unit
G gate apparatus

## Claims

1. An information processing apparatus comprising:
an imaging biometric information acquisition means for acquiring first biometric information of a target, the first biometric information be acquired by imaging the target;
a terminal information acquisition means for acquiring biometric-related information relating to second biometric information of the target from an information processing terminal possessed by the target, the second biometric information be acquired by imaging with the information processing terminal; and
a recognition means for performing a recognition the target using the first biometric information of the target acquired by the imaging biometric information acquisition means and the biometric-related information of the target acquired by the terminal information acquisition means.

2. The information processing apparatus according to claim 1, further comprising:
a user information acquisition means for acquiring user information including biometric information of the target and payment information of the target from an external apparatus other than the information processing apparatus in case the recognition by the recognition means is successful; and
a user registration means for registering the target as a user of a service using the user information.

3. The information processing apparatus according to claim 1 of 2, wherein
the terminal information acquisition means acquires the second biometric information directly from the information processing terminal or via an apparatus external to the information processing terminal.

4. The information processing apparatus according to claim 1 or 2, wherein
the terminal information acquisition means acquires acquisition information for acquiring the second biometric information from an external apparatus in which the second biometric information is registered, directly from the information processing terminal or via an apparatus external to the information processing terminal, and
the external apparatus is an apparatus external to the information processing terminal.

5. The information processing apparatus according to claim 2, further comprising:
a tracking means for performing a tracking the target; and
a user determination means for determining whether or not a store visitor who is a new target for the tracking by the tracking means is registered as the user using biometric information acquired by imaging the store visitor; and wherein
in case the terminal information acquisition means acquires the biometric-related information from an information processing terminal possessed by the store visitor who is not the user, and in case the recognition by the recognition means is successful, the user registration means registers the store visitor as the user.

6. The information processing apparatus according to claim 5, further comprising
a gate control means for controlling a gate to open in case the user tracked by the tracking means leaves a store corresponding to the information processing apparatus.

7. The information processing apparatus according to claim 5, further comprising
a gate control means for controlling a gate to open in case the store visitor who is not the user tracked by the tracking means makes a payment at a store corresponding to the information processing apparatus.

8. The information processing apparatus according to claim 5, further comprising
a terminal control means for controlling an information processing terminal possessed by the user to perform at least one of vibration and audio output in case the recognition means recognizes the store visitor and the store visitor is the user.

9. The information processing apparatus according to claim 5, further comprising
a terminal control means for transmitting information indicating that the store visitor has been registered as the user to an information processing terminal possessed by the user, in case the user registration means registers the store visitor who is not the user as the user.

10. An information processing system comprising:
an information processing apparatus corresponding to an implementing store which implements a service using user information including biometric information of a target and payment information of the target; and
a management apparatus includes:
a user information storage means for storing user information including second biometric information of the target by imaging with an information processing terminal possessed ty the target and the payment information of the target, which is registered from the information processing terminal; and
a store storage means for storing implementing store information related to the implementing store, wherein
the management apparatus
presents the implementing store to the information processing terminal,
receives from the information processing terminal a selected store selected by the target from among implementing stores, and
transmits the second biometric information to the information processing apparatus corresponding to the selected store.

11. An information processing method comprising:
acquiring first biometric information of a target, the first biometric information be acquired by imaging the target;
acquiring biometric-related information relating to second biometric information of the target from an information processing terminal possessed by the target, the second biometric information be acquired by imaging with the information processing terminal; and
performing a recognition the target using the first biometric information of the target and the biometric-related information of the target.

12. A recording medium on which a computer program that allows a computer to execute an information processing method is recorded,
the information processing method comprising:
acquiring first biometric information of a target, the first biometric information be acquired by imaging the target;
acquiring biometric-related information relating to second biometric information of the target from an information processing terminal possessed by the target, the second biometric information be acquired by imaging with the information processing terminal; and
performing a recognition the target using the first biometric information of the target and the biometric-related information of the target.
